# EUROPEAN PATENT APPLICATION

(11) **EP 2 757 285 A1**
(43) Date of publication of application: **23.07.2014**
(21) Application number: 13167648.8
(22) Date of filing: 14.05.2013
(51) Int. Cl.: F16H 1/32

(54) **Harmonic drive**

(30) Priority: 21.01.2013 TW 102102273
(71) Applicant: Harmonic Innovation Technology Co., Ltd., Taipei City 110 (TW)
(72) Inventor: Yeh, Chun-Shen, Xinyi Dist., 110 Taipei (TW)
(74) Representative: Schwerbrock, Florian

(57) **Abstract**

A harmonic drive includes a housing (110), a first gear (120), a second gear (130), an eccentric shaft (140), and a power outputting unit (150). The first gear (120) is fixed to the housing (110), and has a first number of internal teeth. The second gear (130) is engaged with the first gear (120), and has a second number of external teeth. The second number is different from the first number. The eccentric shaft (140) is coupled to the second gear (130) for driving the second gear (130) to eccentrically rotate relative to the first gear (120). The power outputting unit (150) is coupled to the second gear (130) for converting eccentric rotation of the second gear (130) to rotary power.

## Description

### Background of the Invention

### 1. Field of the Invention

The present invention relates to a harmonic drive, and more particularly, to a rigid and easy to manufacture harmonic drive.

### 2. Description of the Prior Art

A harmonic drive is a deceleration device with a high reduction ratio. The conventional harmonic drive generally comprises a rigid gear, a flexible gear and a wave generator. The wave generator is coupled to a power source (such as a motor), and the flexible gear is coupled to a power output shaft for outputting power. A number of teeth of the rigid gear is different from a number of teeth of the flexible gear. The wave generator is configured to press the flexible gear to deform when rotating, in order to drive the teeth of the flexible gear to engage with the teeth of the rigid gear at different positions. Since the number of teeth of the rigid gear is different from the number of teeth of the flexible gear, the flexible gear is driven to slightly rotate when the wave generator keeps rotating. Generally, the reduction ratio of the harmonic drive is equal to a result of dividing the number of teeth of the rigid gear by a difference between the number of teeth of the rigid gear and the number of teeth of the flexible gear. When the rigid gear has more teeth and the difference between the number of teeth of the rigid gear and the number of teeth of the flexible gear is smaller, the reduction ratio of the harmonic drive is quite high.

However, the harmonic drive of the prior art is vulnerable since the flexible gear is made of softer material, and manufacturing processes of the flexible gear are complex and difficult. Moreover, in the harmonic drive of the prior art, the different between the number of teeth of the rigid gear and the number of teeth of the flexible gear must be a multiple of 2, therefore, the reduction ratio of the harmonic drive of the prior art has less flexibility.

### Summary of the Invention

The present invention provides a harmonic drive comprising a housing, a first gear, a second gear, an eccentric shaft, and a power outputting unit. The first gear is fixed to the housing, and has a first number of internal teeth. The second gear is engaged with the first gear, and has a second number of external teeth. The second number is different from the first number. The eccentric shaft is coupled to the second gear for driving the second gear to eccentrically rotate relative to the first gear. The power outputting unit is coupled to the second gear for converting eccentric rotation of the second gear to rotary power.

In contrast to the prior art, the harmonic drive of the present invention utilizes rigid gears to achieve a high reduction ratio, therefore, the harmonic drive of the present invention has stronger rigidity and is invulnerable. In addition, manufacturing processes of the rigid gears are simpler, thus the harmonic drive of the present invention is easy to manufacture with high yield rate. Moreover, a difference between a number of teeth of the first gear and a number of teeth of the second gear can be an odd number or an even number, therefore, the reduction ratio of the harmonic drive of the present invention has more flexibility.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is an exploded view diagram of a harmonic drive of the present invention.
FIG. 2 is an assembly diagram of the harmonic drive of FIG. 1.
FIG. 3 is a diagram showing the second gear of the harmonic drive of the present invention eccentrically rotating relative to the first gear.

### Detailed Description

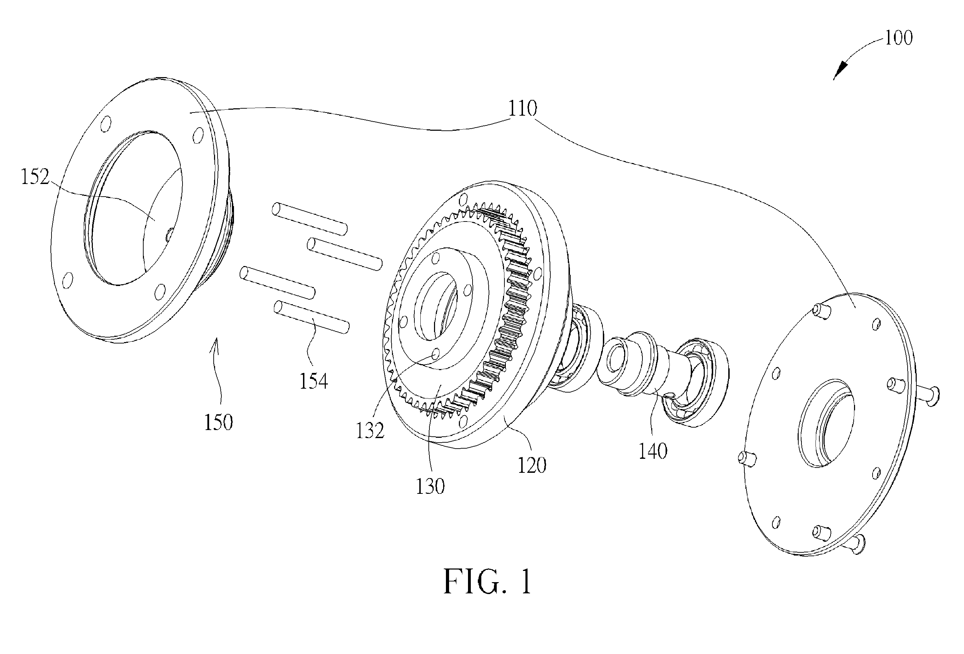

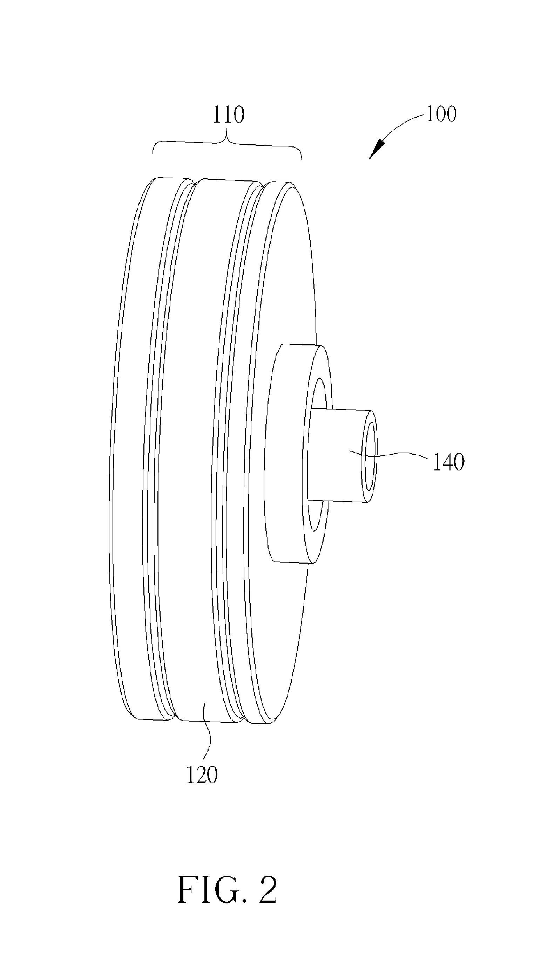

Please refer to FIG. 1 and FIG. 2. FIG. 1 is an exploded view diagram of a harmonic drive of the present invention. FIG. 2 is an assembly diagram of the harmonic drive of FIG. 1. As shown in figures, the harmonic drive 100 of the present invention comprises a housing 110, a first gear 120, a second gear 130, an eccentric shaft 140, and a power outputting unit 150. The first gear 120 is fixed to the housing 110, and has a first number of internal teeth. The second gear 130 is engaged with the first gear 120, and has a second number of external teeth. The second number is different from the first number. The eccentric shaft 140 is coupled to the second gear 130 for driving the second gear 130 to eccentrically rotate relative to the first gear 120. The power outputting unit 150 is coupled to the second gear 130 for converting eccentric rotation of the second gear 130 to rotary power. The power outputting unit 150 comprises a rotary unit 152, and a plurality of coupling units 154. The rotary unit 152 is affixed to the housing 110 in a rotatable manner. The plurality of coupling units 154 are coupled between the rotary unit 152 and the second gear 130 for transmitting power of eccentric rotation of the second gear 130 to the rotary unit 152, in order to further drive the rotary unit 152 to rotate for outputting rotary power. First ends of the coupling units 154 can be fixed to the rotary unit 152, and second ends of the coupling units 154 can be inserted into corresponding holes 132 of the second gear 130, such that the power of eccentric rotation of the second gear 130 can be transmitted to the rotary unit 152.

In addition, the first gear 120 is an internal gear, and the second gear 130 is an external gear. A pitch circle diameter of the second gear 130 is smaller than a pitch circle diameter of the first gear 120. A centerline of the first gear 120 and a centerline of the second gear 130 are not overlapped, and the centerline of the first gear 120 is parallel to the centerline of the second gear 130. Both the first gear 120 and the second gear 130 are rigidity gears. The eccentric shaft 140 can be coupled to a power source (such as a motor), and the rotary unit 152 can be coupled to a power output shaft for outputting power.

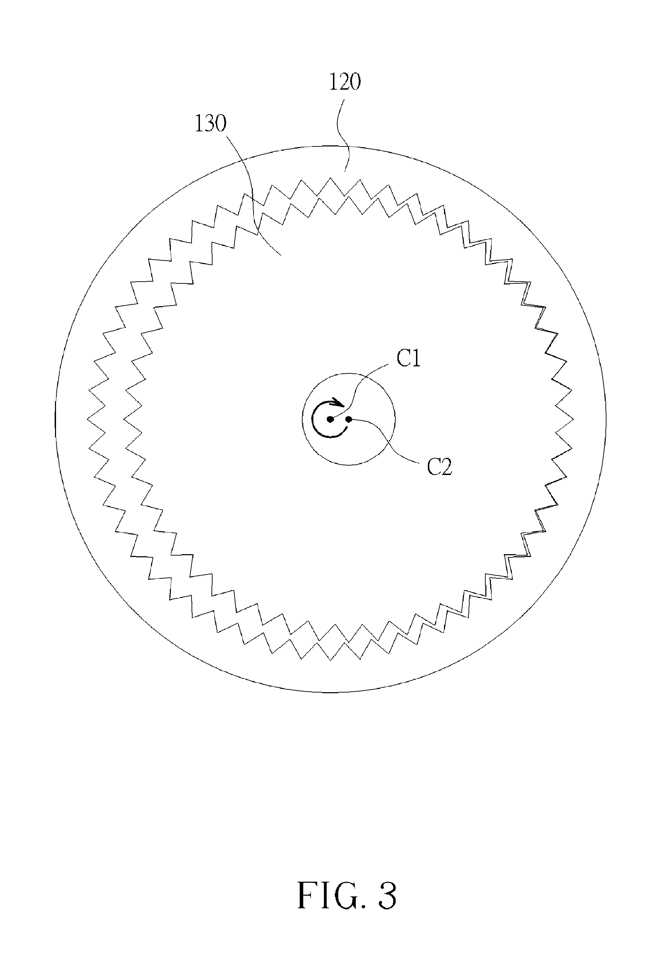

According to arrangement of the above embodiment, when the power source drives the eccentric shaft 140 to rotate, an engaged position between the first gear 120 and the second gear 130 is changed, and the second gear 130 is further driven to eccentrically rotate relative to the first gear 120. For example, please refer to FIG.3, and refer to FIG. 1 and FIG. 2 as well. FIG. 3 is a diagram showing the second gear of the harmonic drive of the present invention eccentrically rotating relative to the first gear. As shown in FIG. 3, when the eccentric shaft 140 is driven to rotate clockwise, the engaged position between the first gear 120 and the second gear 130 is also changed clockwise, such that a center C2 of the second gear 130 rotates in circular motion around a center C1 of the first gear 120. If a difference between the first number and the second number is 4, when the eccentric shaft 140 makes one rotation, since the first gear 120 is fixed to the housing 110 without rotating, and the difference between the number of teeth of the first gear 120 and the number of teeth of the second gear 130 is 4, the second gear 130 is driven to rotate a circumferential angle of 4 teeth, and power of the eccentric rotation of the second gear 130 is transmitted to the rotary unit 152 via the coupling units 154, in order to drive the rotary unit 152 to rotate. Therefore, a reduction ratio of the harmonic drive 100 is equal to a result of dividing the number of teeth of the first gear 120 by the difference between the number of teeth of the first gear 120 and the number of teeth of the second gear 130. When the first gear 120 has more teeth and the difference between the number of teeth of the first gear 120 and the number of teeth of the second gear 130 is smaller, the reduction ratio of the harmonic drive 100 of the present invention is quite high.

In the embodiments of the present invention, the difference between the first number and the second number can be at least equal to 1, and the difference between the first number and the second number can be an odd number or an even number.

In contrast to the prior art, the harmonic drive of the present invention utilizes rigid gears to achieve the high reduction ratio, therefore, the harmonic drive of the present invention has stronger rigidity and is invulnerable. In addition, manufacturing processes of the rigid gears are simpler, thus the harmonic drive of the present invention is easy to manufacture with high yield rate. Moreover, the difference between the number of teeth of the first gear and the number of teeth of the second gear can be an odd number or an even number, therefore, the reduction ratio of the harmonic drive of the present invention has more flexibility.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A harmonic drive, comprising:
a housing;
a first gear, fixed to the housing, the first gear having a first number of internal teeth;
a second gear, engaged with the first gear, the second gear having a second number of external teeth, wherein the second number is different from the first number;
an eccentric shaft, coupled to the second gear for driving the second gear to eccentrically rotate relative to the first gear; and
a power outputting unit, coupled to the second gear for converting eccentric rotation of the second gear to rotary power.

2. The harmonic drive of claim 1, wherein the power outputting unit comprises:
a rotary unit, affixed to the housing in a rotatable manner; and
a plurality of coupling units, coupled between the rotary unit and the second gear for transmitting power of eccentric rotation of the second gear to the rotary unit.

3. The harmonic drive of claim 1, wherein a pitch circle diameter of the second gear is smaller than a pitch circle diameter of the first gear.

4. The harmonic drive of claim 1, wherein a centerline of the first gear and a centerline of the second gear are not overlapped.

5. The harmonic drive of claim 1, wherein a centerline of the first gear is parallel to a centerline of the second gear.

6. The harmonic drive of claim 1, wherein the first gear and the second gear are rigidity gears.
